# EUROPEAN PATENT APPLICATION

(11) **EP 2 568 014 A1**
(43) Date of publication of application: **13.03.2013**
(21) Application number: 11844656.6
(22) Date of filing: 15.10.2011
(51) Int. Cl.: C08L 97/02, E04F 15/12

(54) **PROCESS FOR MANUFACTURING RAISED FLOOR AND RAISED FLOOR MANUFACTURED ACCORDING TO SAME**

(30) Priority: 03.12.2010 CN 201010573183; 18.07.2011 CN 201120253800 U; 29.08.2011 CN 201120317965 U; 29.08.2011 CN 201120318061 U; 29.08.2011 CN 201120317771 U
(71) Applicant: Huzhou Xinfeng Wood Plastic Composite Co., Ltd., Zhejiang 313200 (CN)
(72) Inventor: SHEN, Shuiliang, Huzhou Zhejiang 313200 (CN)
(74) Representative: Bettinger Schneider Schramm
(86) International application number: PCT/CN2011/080822
(87) International publication number: WO 2012/071952

(57) **Abstract**

Provided in the present invention is a process for manufacturing a raised floor, wherein the process comprises mixing and granulating wood and plastic materials, and manufacturing the raised floor. Also provided in the present invention is a raised floor manufactured according to the manufacturing process, wherein the floor comprises a supporting part, a draining structure, a connecting structure and an anti-sliding structure. The raised floor can drain accumulated water in time and effectively, meet the strength for mounting connection and usage, simplify the mounting process and procedure, and ensure the friction coefficient between floors; it is simple in structure and is safe and reliable.

## Description

The invention relates to a manufacturing process for floor body product, in particular relates to the manufacturing process for raised floor made of wood plastic composite (WPC) material and the floor utilizing thereof.

Raised floor, also indicated as precast floor, is generally assembled by panel pieces, joists and adjustable supports etc. of various type and material. A supported spacing formed by raised floor, basic floor or ground can enable to lay out crisscross cables or any other pipelines and can also satisfy requirement of air condition, such as static pressure air supply through disposing a spiracle at appropriate position of the raised floor after design. The raised floor possesses advantages like light weight, high density, flat surface, standard size, high quality and excellent decorated effects etc. In addition, the raised floor used in the outdoors or indoors such as in kitchen must possesses performances like waterproofing, dewatering, fireproofing, and also insect, corrosion and microbial prevention etc, in order to being generally utilized in decoration field.

Nowadays, the WPC material is widely applied in manufacturing raised floor, a raised floor made of WPC material in overseas or domestic area consists of an upper PE (HDPE high density polyethylene) WPC platelet and a lower plastic chassis, wherein both are fixed with metal screws. However, the manufacturing process of the floor is complex, time-consuming and costly. In addition, the plastic chassis is apt to aging to pollute, which can't correspond to environmental protection concept of the enterprise. Furthermore, the floor used for a long time may incur injury owing to its screw loosing even falling off.

The invention implies to provide for a manufacturing process for raised floor for simplifying the production process, reducing production cost, and enhancing product strength, corrosion resistance, anti-aging, and antimicrobial property. Meanwhile, the invention implies to provide for a raised floor which possesses simple structure and reasonable design according to the manufacturing process, enabling for assuring the friction coefficient between the ground and the raised floor, generating none ripping between the floors after using for a long time, and simplifying installation process or procedure on the basis of meeting the required installation and connection strength. Since water on the floor could be got rid of timely and effectively, the provided floor which meets the strength, safety and service life requirements is convenient to use.

In order to achieve above mentioned technical effect, the invention provides for following technical solution:
(1) Refining and granulating WPC material
   (a) breaking and grinding wasted wood or fiber material into fine powder with fineness in 60-80 mesh, then naturally drying it for subsequent use;
   (b) blending the fine powder in weight 34%-54%, active calcium carbonate in weight 2% - 4% , WPC processing agent in weight 4% - 6% into PP resin or PE or PET plastic raw material in weight 35% - 55% to form WPC material in high blending speed, wherein blending temperature ranges from 100 to 120°C, blending time depending on the dry degree of the fine powder ranges from 15 to 20 min when the moisture is lower than 1%, and from 20 to 30 min when the moisture is more than 1%, and rotating speed ranges from 100 to 430 RPM;
   (c) cooling down the WPC material after high-speed blending to 40°C, wherein the cooling time ranges from 10 to 20 min, rotating speed ranges from 70 to 100 RPM;
   (d) putting the cooled and blended WPC material into an extrusion machine to extrude a WPC splat in length-to-diameter ratio 36:40 and rotating speed 500 RPM, and cutting the WPC splat, and then storing the splats into a storage silo to naturally cool down for subsequent use;
(2) Manufacturing a raised floor
   (a) transporting the WPC splats from the storage silo into a baking cylinder to prebake and dry in temperature 80±5°C and 2±0.5 hours;
   (b) transporting the WPC splats from the cylinder into a plastic injection machine which clamping force is not less than 200 tons, wherein the plastic injection machine is disposed a high wear-resisting B type screw, and the highest temperature of stove is 190±10°C, and the temperature of its nozzle is 170±10°C;
   (c) extruding the WPC splats from the plastic injection machine into a raised floor mould cavity by pressure 125 kgf/cm²-135 kgf/cm² with an injection molding cycle 40 seconds, wherein the pressure holding cycle is 15±5 seconds, cooling time is 12- 20 seconds, and then forming and ejecting the WPC splats, wherein further includes the step that controlling the temperature of the raised floor mould within 80±10°C by a temperature controller.

Furthermore, the fiber material is made of straw and bran shell; the WPC processing agent composes of SBS ethylene copolymer in weight 1.5-2.5% and maleic anhydride grafted polyproylene MAH-G-PP in weight 2.5%-3.5%.

Furthermore, the process of refining and granulating WPC material further includes the step that adding iron series pigments in weight 0.5%-1.3%, antioxidant in weight 0.4%, stabilizer in weight 0.3%, germicide in weight 0.3%, plastic agent toughening reagent in weight 0.2% and lubricant in weight 0.3%-0.7%; wherein the iron series pigment may be blended in accordance with colour requirement of customers, commonly using carbon black SJR-30, oxidation iron oxide red 130 A, ferric oxide yellow N0313; the antioxidants can adopt 1010, the stabilizer can adopt UV-531, the antibacterial agent may adopt WPC guard, the plastic toughening agents can adopt EPDM, and the lubricant can adopt No.58 paraffin wax.

Meanwhile, the invention further discloses a raised floor utilizing the manufacturing process, including a floor body, which being characterized in that further including supports extended downward from the bottom side of the floor body, a drainage disposed on the floor body for ruling water out the raised floor, a connecting part disposed at each side part of the floor body for interacting with other raised floor, and antiskid portions disposed at each support for enhancing the friction coefficient of the raised floor..

Furthermore, the drainage includes a rhone passing through the floor body and being disposed in the floor body, wherein a tiebar connecting the opposite side of the rhone is disposed in the rhone, the tiebar is horizontally disposed in the rhone.

Furthermore, the opposite sides of the rhone incline towards the rhone, allowing for the rhone shaped as an obtrapezium.

Furthermore, parts of the opposite sides of rhone between an upper aperture of the rhone and the postion disposed the tiebar incline towards the rhone, and between the position disposed the tiebar and an lower aperture of the rhone incline backwards the rhone, allowing for the rhone shaped as a sandglass.

Furthermore, the connecting part includes connections I disposed between a side portion I and a side portion II and connections II disposed between a side portion III opposite to the side portion I and a side portion IV opposite to the side portion II, the quantity of the connections II equals to the connections I. The connections II of a raised floor match and embed into the connections I of another raised floor between two floors..

Furthermore, a caulking groove matches with the connection II, 2 flat convex portions are disposed on each side, the distance between the outside of the flat convex portion and the outside of the caulking groove is no less than 1.8mm, the length of the caulking groove is no less than 5mm, and the width of the caulking groove is no less than 3mm. The connection II includes a downward convex portion protruding downward into the side part III and side part IV disposed therebetween and a toward groove portion protruding toward into the side part III and side part IV disposed therebetween, wherein the downward convex portion matches with the caulking groove, and the toward groove portion matches with the flat convex portion.

Furthermore, the support includes external supports disposed at the 4 broadsides of the bottom of the floor body and connected with each other and internal supports disposed at the bottom of the floor body and interlaced with each other. The antiskid portion includes an antiskid bolt I disposed on the external support and an antiskid bolt II disposed on the internal support, a mounting hole I for accommodating the antiskid bolt I is disposed at the bottom of a connecting part of 2 external supports, a mounting hole II for accommodating the antiskid bolt II is disposed at the bottom of an interlacing part of 2 internal supports, wherein the qualification to be set of antiskid bolt I can be same as antiskid bolt II, and the structure of mounting hole I can be same as mounting hole II. Meanwhile, the antiskid bolt I can interchange with antiskid bolt II, wherein the internal supports are vertically and horizontally interlaced with each other, or vertically interlaced with each other, or disposed along the diagonals of the plane of the floor body and interlaced with each other.

A raised floor including a floor body, which being characterized in that a reinforcing part being disposed at the bottom of the floor body.

Furthermore, the reinforcing part includes a first reinforcing band and a second reinforcing band disposed at the bottom of the floor body and interlaced with each other, enabling for simultaneously reinforcing the bands.

Furthermore, a drainage is disposed on the floor body.

Furthermore, the drainage includes a rhone passing through the floor body and being disposed on the upper surface of the floor body, enabling for effectively ruling water out and enhangcing the frictional resistance between the raised floor and human feet or object.

Furthermore, the floor body includes n×n unit panels, wherein the rhone is parallelly disposed on the unit panel, the rhones in the orthogonal direction of adjacent 2 units panel are perpendicular to each other, the first reinforcing band and the second reinforcing band are disposed within the area formed by projecting 2 rhones on the lower surface of floor body, enabling for beautiful design as well as effectively protection human from skid and injury by interlaced disposing the rhones for enhangcing the frictional resistance between the raised floor and human feet.

Furthermore, the reinforcing part further includes a third reinforcing band disposed on the bottom surface of the floor body and connected the first reinforcing band and the second reinforcing band, enabling for further reinforcing the raised floor.

Furthermore, the first reinforcing band and the second reinforcing band are perpendicular to each other, enabling for facilitating processing and molding.

Furthermore, a connection for connecting with other floor bodies is disposed in the floor body.

Furthermore, the connection includes clipping grooves disposed at the opposite sides of the floor body and clipping bulges disposed at the other opposite sides of the floor body, wherein the clipping bulge clips and matches with the clipping groove, which enabling for facilitating installation.

Furthermore, drainage holes are disposed in the clipping groove, which enabling for ventilating and draining.

A raised floor including a floor body at which frontside horizontally disposed a plurality of rhones and reinforcing bands disposed at the backside of the floor body, which being characterized in that including a plurality of horizontal reinforcing bands disposed horizontally and a plurality of vertical reinforcing bands vertically, wherein a supporting tube for supporting the floor body as well as effectively protecting the connection spot from stress concentration thereon is disposed at the connection spot of the horizontal reinforcing band and vertical reinforcing band,

Furthermore, the level of lower surface of the supporting tube is lower than the horizontal and vertical bands. The supporting tube contacts with ground and further imposes the reinforcing bands to be divorced from the ground.

Furthermore, the width of horizontal reinforcing band corresponding to the rhone is larger than each sites on other position, enabling for offsetting the force applying on the floor body caused by disposing the rhones with the reinforced horizontal reinforcing bands.

Furthermore, the reinforcing band further includes at least one oblique reinforcing band which connects the adjacent 2 obliquely corresponding connection spots therebetween.

Furthermore, the oblique reinforcing band is disposed in centre of the backside of the floor body owing to which strength the centre part possesses is relatively lower than the edge part, which hence can reinforce the strength for the centre part.

A raised floor including a floor body at which frontside horizontally and vertically disposed a plurality of rhones and reinforcing bands disposed at the backside of the floor body, wherein the floor body being divided by said rhones into N×M pieces connected therebetween, which being characterized in that the reinforcing band including a plurality of horizontal reinforcing bands disposed horizontally and a plurality of vertical reinforcing bands vertically, and closing reinforcing rings disposed at the backside of the floor body, further including a supporting tube disposed at the connection spot of the horizontal reinforcing band and vertical reinforcing band,

Furthermore, the level of lower surface of the supporting ring is lower than the horizontal and vertical bands, and the closing reinforcing band. Meanwhile, the supporting tube contacts with ground and further imposes the reinforcing bands to be divorced from the ground which enabling for preventing the loss of the reinforcing band.

Furthermore, the width of horizontal reinforcing band corresponding to the horizontal rhone is larger than each sites on other position, the width of horizontal reinforcing band corresponding to the vertical rhone from the vertical reinforcing band is larger than each sites on other position, enabling for offsetting the force applying on the floor body caused by disposing the rhones with the reinforced horizontal reinforcing bands.

Furthermore, the closing reinforcing ring shapes as rectangle in parallel to the edge of the floor body.

Furthermore, the reinforcing band further includes a plurality of oblique reinforcing bands which connect the adjacent 2 oblique corresponding connection spots therebetween.

Furthermore, circular reinforcing rings are disposed in centre of the backside of the floor body owing to which strength the centre part possesses is relatively lower than the edge part, which hence can reinforce the strength for the centre part.

Furthermore, the circular reinforcing rings are disposed within the closing reinforcing ring.

A raised floor including a floor body at which frontside obliquely disposed a plurality of rhones and reinforcing bands disposed at the backside of the floor body, which being characterized in that the reinforcing band including a first oblique reinforcing band in parallel to the rhone and a second reinforcing band perpendicular thereto, wherein a supporting tube for supporting the floor body as well as effectively protecting the connection spot from stress concentration thereon being disposed at the connection spot of the first and second reinforcing bands.

Furthermore, the level of lower surface of the supporting ring is lower than the first and second bands. Meanwhile, the supporting tube contacts with ground and further imposes the reinforcing bands to be divorced from the ground which enabling for preventing the loss of the reinforcing band.

Furthermore, the width of first oblique reinforcing band corresponding to the rhone is larger than each sites on other position, which enabling for offsetting the force applying on the floor body caused by disposing the rhones with the reinforced horizontal reinforcing bands.

Furthermore, the reinforcing band further includes at least one horizontal reinforcing band, which enabling for enhancing the strength for the floor body.

Furthermore, the reinforcing band further includes at least one vertical reinforcing band, which enabling for enhancing the strength for the floor body.

Furthermore, a supporting tube is disposed at the part disposed reinforcing bands, which enabling for increasing force spots and further enhancing the stability and prolonging service life.

The advantages of the invention can be easily embodied by employing the technical solution mentioned above that, for example, timely and effectively ruling water out the raised floor of the invention, simplifying the production process, reducing production cost, and enhancing product strength, corrosion resistance, anti-aging, and antimicrobial property, enabling for assuring the friction coefficient between the ground and the raised floor, generating none ripping between the floors used for a long time, and simplifying installation process or procedure on the basis of meeting the required installation and connection strength. The provided floor which meets the strength, safety and service life requirement is convenient to use..

The above described features and advantages as well as others, will becomes more readily apparent to those skilled in the art by reference to the following detailed description and accompanying drawings. Wherein
FIG. 1 shows a representative diagram of a plan view of a first preferred embodiment of the invention;
FIG.2 shows a representative diagram of a cutaway view from A-A direction of embodiment of the invention in FIG.1;
FIG.3 shows a representative diagram of an enlarged view of spot B in FIG.2;
FIG.4 shows a representative diagram of anther structure of a sectional view of rhone from FIG.1;
FIG.5 shows a representative diagram of a bottom view of the embodiment in FIG.1;
FIG.6 shows a representative diagram of a front view of the embodiment in FIG.1;
FIG.7 shows a representative diagram of a cutaway view from C-C direction of embodiment of the invention in FIG.1;
FIG.8 shows a representative diagram of a cutaway view from D-D direction of embodiment of the invention in FIG.1;
FIG.9 shows a representative diagram of an enlarged view of spot E in FIG.1;
FIG.10 shows a representative diagram of an enlarged view of spot F in FIG.1;
FIG.11 shows a representative diagram of an enlarged view of spot G in FIG.1;
FIG.12 shows a representative diagram of a enlarged and cutaway view from H-H direction of embodiment of the invention in FIG. 5;
FIG.13 shows a representative diagram of a internal support at the bottom of the embodiment with a second interlaced structure according to the invention;
FIG.14 shows a representative diagram of a internal support at the bottom of the embodiment with a third interlaced structure according to the invention;
FIG.15 shows a representative diagram of the rhone with a second disposed structure;
FIG.16 shows a representative diagram of the rhone with a third disposed structure;
FIG.17 shows a representative diagram of a state when bonding two raised floor together;
FIG.18 shows a representative diagram of a state after bonding two raised floor together;
FIG.19 shows a representative diagram of an enlarged view of spot J in FIG.18;

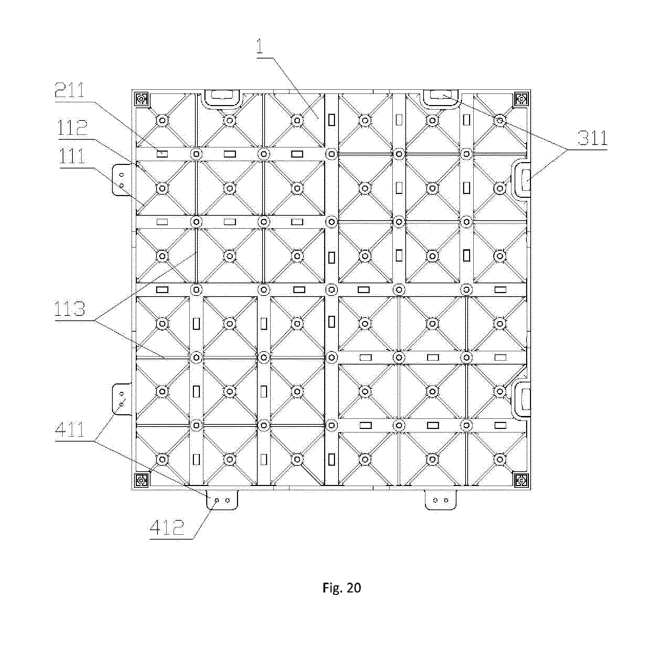

FIG.20 shows a representative diagram of a plan view of a second preferred embodiment of the invention;

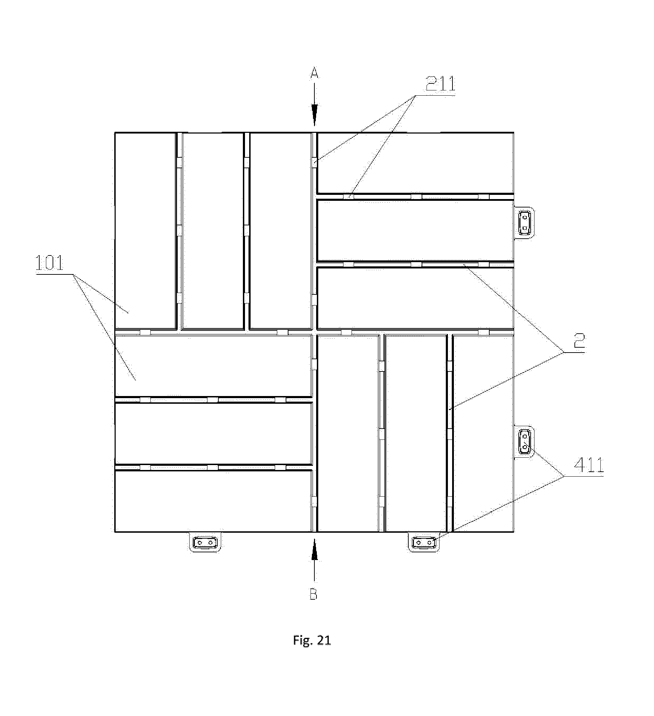

FIG.21 shows a representative diagram of a top view of the embodiment of the invention in FIG.20;
Fig.22 shows a representative diagram of a directional view in direction A;
Fig.23 shows a representative diagram of a directional view in direction B;
FIG.24 shows a representative diagram of a plan view of a third preferred embodiment of the invention;
FIG.25 shows a representative diagram of a plan view of a forth preferred embodiment of the invention;
FIG.26 shows a representative diagram of a plan view of a fifth preferred embodiment of the invention.

### Embodiment 1

The invention provides for a technical solution that a manufacturing process for raised floor, which is characterized in that: including the following steps that
(1) refining and granulating WPC material
   (a) breaking and grinding wasted wood or fiber material into fine powder with fineness in 80 mesh, then naturally drying it for subsequent use;
   (b) blending the fine powder in weight 54%, active calcium carbonate in weight 4% , WPC processing agent in weight 4% into PP resin raw material in weight 35% to form WPC material in high blending speed, wherein blending temperature is 100°C, blending time is 15min, and rotating speed is 430 RPM;
   (c) cooling down the WPC materials after high-speed blending to 40°C, wherein the cooling time is 20 min, rotating speed is 70 RPM;
   (d) putting the cooled and blended WPC material into an extrusion machine to extrude a WPC splat in length-to-diameter ratio 36:40 and rotating speed 500 RPM, and cutting the WPC splat, and then storing the splats into a storage silo to naturally cool down for subsequent use;
(2) Manufacturing a raised floor
   (a) transporting the WPC splats from the storage silo into a baking cylinder to prebake and dry in temperature 75°C and 2.5 hours;
   (b) transporting the WPC splats from the cylinder into a plastic injection machine which clamping force is 300 tons, wherein the plastic injection machine is disposed a high wear-resisting B type screw, and the highest temperature of stove is 200°C, and the temperature of its nozzle is 180°C;
   (c) extruding the WPC materials from the plastic injection machine into a raised floor mould cavity by pressure 125 kgf/cm² with an injection molding cycle 40 seconds, wherein the pressure holding cycle is 20 seconds, cooling time is 12 seconds, and then forming and ejecting WPC splats, wherein further includes the step that controlling the temperature of the raised floor mould within 90°C by a temperature controller.

Furthermore, the fiber material is made of straw and bran shell; the WPC processing agent composes of SBS ethylene copolymer in weight 1.5% and maleic anhydride grafted polyproylene MAH-G-PP in weight 2.5%. the process of refining and granulating WPC material further includes the step that adding iron series pigments in weight 1.3%, antioxidant in weight 0.4%, stabilizer in weight 0.3%, germicide in weight 0.3%, plastic agent toughening reagent in weight 0.2% and lubricant in weight 0.5%.

### Embodiment 2

The invention provides for a technical solution that a manufacturing process for raised floor, which is characterized in that: including the following steps that
(1) Refining and granulating WPC material
   (a) firstly breaking and grinding wasted wood or fiber material into fine powder with fineness in 70 mesh, then naturally drying it for subsequent use;
   (b) blending the fine powder in weight 44%, active calcium carbonate in weight 3% , WPC processing agent in weight 5% into PE plastic raw material in weight 45% to form WPC material in high blending speed, wherein blending temperature is 110°C, blending time is 20 min, and rotating speed is 300RPM;
   (c) cooling down the WPC material after high-speed blending to 40°C, wherein the cooling time is 15 min, rotating speed is 80 RPM;
   (d) putting the cooled and blended WPC material into an extrusion machine to extrude a WPC splat in length-to-diameter ratio 36:40 and rotating speed 500 RPM and cutting the WPC splats, and then storing the splats into a storage silo to naturally cool down for subsequent use;
(2) Manufacturing a raised floor
   (a) transporting the WPC splats from the storage silo into a baking cylinder to prebake and dry in temperature 80°C and 2 hours;
   (b) transporting the WPC splats from the cylinder into a plastic injection machine which clamping force is not less than 200 tons, wherein the plastic injection machine is disposed a high wear-resisting B type screw, and the highest temperature of stove is 190°C, and the temperature of its nozzle is 170°C;
   (c) extruding the WPC splats from the plastic injection machine into a raised floor mould cavity by pressure 130 kgf/cm² with an injection molding cycle 40 seconds, wherein the pressure holding cycle is 15 sec, cooling time is 15 seconds, and then forming and ejecting WPC splats, wherein further includes the step that controlling the temperature of the raised floor mould within 80°C by a temperature controller.

Furthermore, the fiber material is made of straw and bran shell; the WPC processing agent composes of SBS ethylene copolymer in weight 2% and maleic anhydride grafted polyproylene MAH-G-PP in weight 3%, the process of refining and granulating WPC material further includes the step that adding iron series pigments in weight 1.1%, antioxidant in weight 0.4%, stabilizer in weight 0.3%, germicide in weight 0.3%, plastic agent toughening reagent in weight 0.2% and lubricant in weight 0.7%.

### Embodiment 3

The invention provides for a technical solution that a manufacturing process for raised floor, which is characterized in that: including the following steps that
(1) Refining and granulating the WPC material
   (a) breaking and grinding wasted wood or fiber material into fine powder with fineness in 60 mesh, then naturally drying it for subsequent use;
   (b) blending the fine powder in weight 35%, active calcium carbonate in weight 2%, WPC processing agent in weight 6% into PP resin or PE or PET plastic raw material in weight 55% to form WPC material in high blending speed, wherein blending temperature is 120°C, and rotating speed is 100 RPM;
   (c) cooling down the WPC material after high-speed blending to 40°C, wherein the cooling time ranges from 10 to 20 min, rotating speed is 100 RPM;
   (d) putting the cooled and blended WPC material into an extrusion machine to extrude a WPC splat in length-to-diameter ratio 36:40 and rotating speed 500 RPM and extrude and cutting the WPC splats, and then storing the splats into a storage silo to to naturally cool down for subsequent use;
(2) Manufacturing a raised floor
   (a) transporting the WPC splats from the storage silo into a baking cylinder to prebake and dry in ,temperature 85°C and 1.5 hours;
   (b) transporting the WPC splats from the cylinder into a plastic injection machine which clamping force is not less than 200 tons, wherein the plastic injection machine is disposed a high wear-resisting B type screw, and the highest temperature of stove is 180°C, and the temperature of its nozzle is 160°C;
   (c) extruding the WPC splats from the plastic injection molding machine into a raised floor mould cavity by pressure 135 kgf/cm² with an injection molding cycle 40 seconds, wherein the pressure holding cycle is 10 seconds, cooling time is 12- 20 seconds, and then forming and ejecting the WPC splats, wherein further includes the step that controlling the temperature of the raised floor mould within 70°C by a temperature controller.

Furthermore, the fiber material is made of straw and bran shell; the WPC processing agent composes of SBS ethylene copolymer in weight 2.5% and maleic anhydride grafted polyproylene MAH-G-PP in weight 3.5%, the process of refining and granulating WPC material further includes the step that adding iron series pigments in weight 0.5%, antioxidant in weight 0.4%, stabilizer in weight 0.3%, germicide in weight 0.3%, plastic agent toughening reagent in weight 0.2% and lubricant in weight 0.3%.

In the mentioned embodiments above, the blending time is 30min; the blending time depending on the dry degree of the wood powder or fiber powder ranges from 15 to 20 min when the moisture is lower than 1%, and from 20 to 30 min when the moisture is more than 1%, time of utes.

Wherein the iron series pigment may be blended in accordance with color requirement of customers, commonly used carbon black SJR-30, oxidation iron oxide red 130 A, ferric oxide yellow N0313; the antioxidants can adopt 1010, the stabilizer can adopt UV-531, the antibacterial agent may adopt WPC-GUARD, the plastic toughening agents can adopt EPDM, and the lubricant can adopt No.58 paraffin wax.

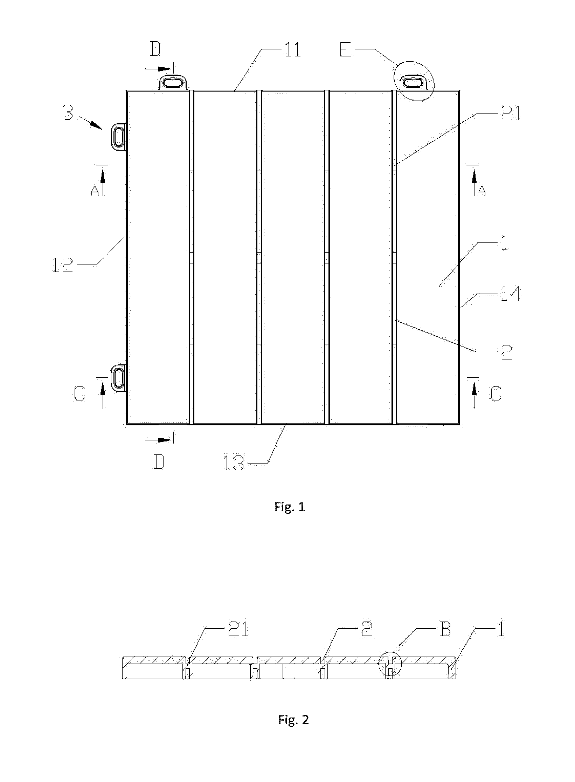

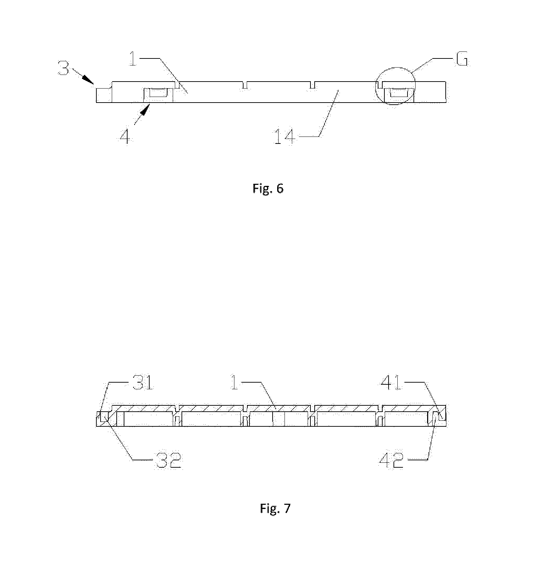

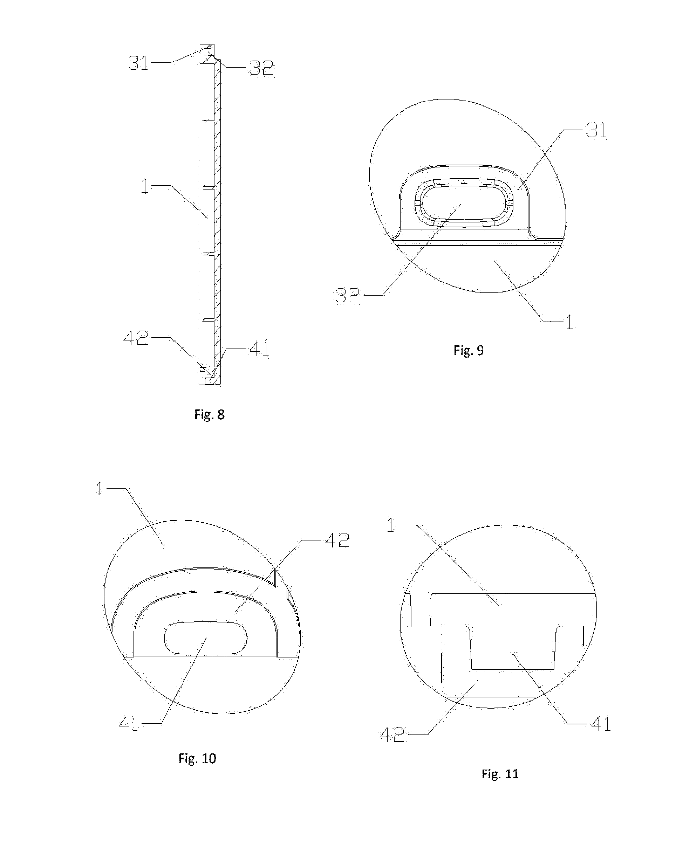

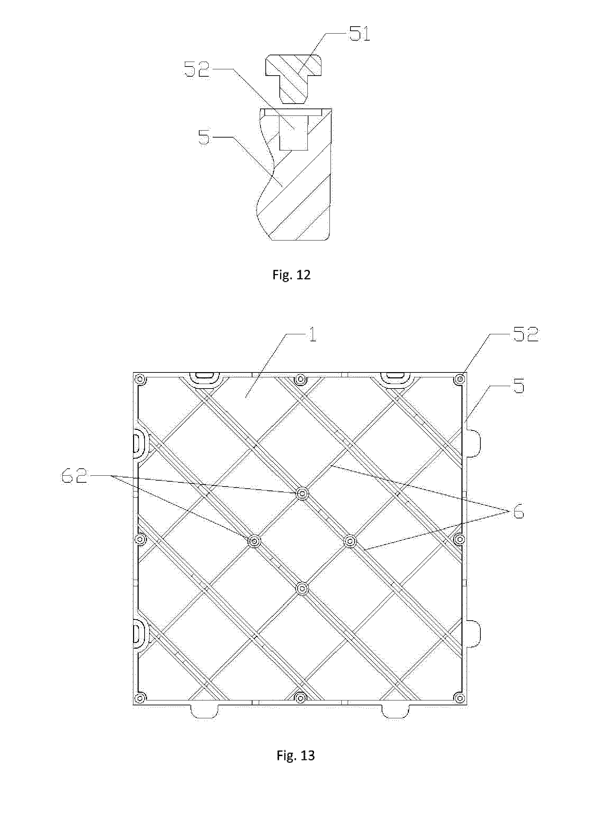

Meanwhile, as illustrated by reference to FIG.1 to 12, the invention further discloses a raised floor including a floor body 1, and further including supports extended downward from the bottom side of the floor body, a drainage disposed on the floor body for ruling water out the raised floor, a connecting part disposed at each side part of the floor body for interacting with other raised floor, and antiskid portions disposed at each support for enhancing the friction coefficient of the raised floor..

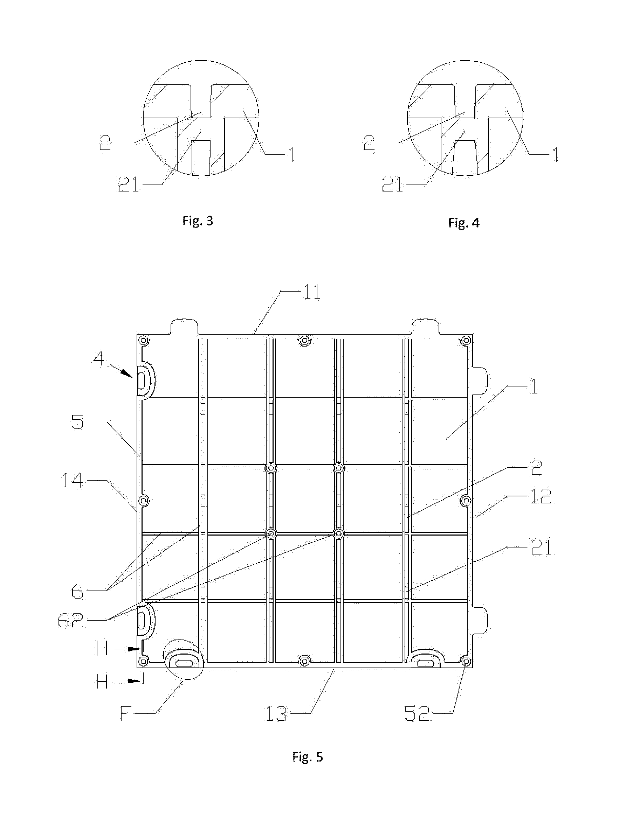

The drainage includes a rhone 2 passing through the floor body and being disposed in the floor body, wherein a tiebar 21 connecting the opposite side of the rhone is disposed in the rhone, the tiebar 21 is horizontally disposed in the rhone. As shown in FIG.3, the opposite sides of the rhone incline towards the rhone, allowing for the rhone shaped as an obtrapezium. and between the position disposed the tiebar and an lower aperture of the rhone incline backwards the rhone, allowing for the rhone shaped as a sandglass, as shown in FIG.4.

The connecting part includes connections I3 disposed between a side portion I and a side portion II and connections II 4 disposed between a side portion III 13 opposite to the side portion I and a side portion IV 14 opposite to the side portion II, the quantity of the connections II equals to the connections I. The connections II of a raised floor match and embed into the connections I of another raised floor between two floors. Furthermore, the connecting part includes connections I disposed between a side portion I and a side portion II and connections II disposed between a side portion III opposite to the side portion I and a side portion IV opposite to the side portion II, the quantity of the connections II equals to the connections I. The connections II of a raised floor match and embed into the connections I of another raised floor between two floors.

The supports includes external supports 5 disposed at the 4 broadsides of the bottom of the floor body and connected with each other and internal supports 6 disposed at the bottom of the floor body and interlaced with each other. The antiskid portion includes an antiskid bolt I51 disposed on the external support and an antiskid bolt II disposed on the internal support, a mounting hole I52 for accommodating the antiskid bolt I is disposed at the bottom of a connecting part of 2 external supports, a mounting hole II62 for accommodating the antiskid bolt II is disposed at the bottom of an interlacing part of 2 internal supports, wherein the qualification to be set of antiskid bolt I can be same as antiskid bolt II, and the structure of mounting hole I can be same as mounting hole II. Meanwhile, the antiskid bolt I can interchange with antiskid bolt II, wherein the internal supports are vertically and horizontally interlaced with each other, or vertically interlaced with each other, or disposed along the diagonals of the plane of the floor body and interlaced with each other.

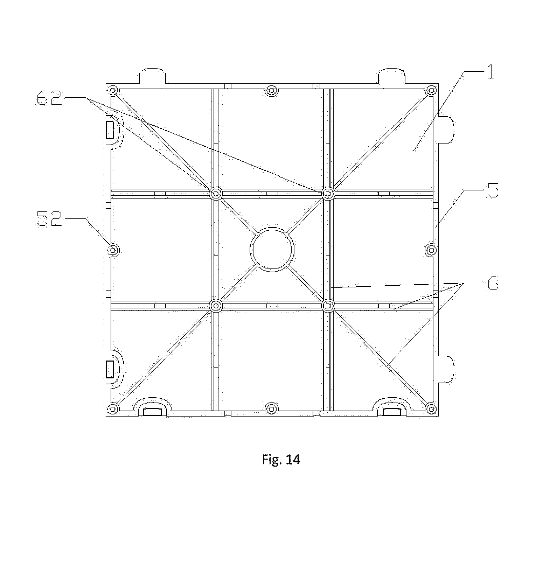

In the mentioned embodiment above, wherein the qualification to be set of antiskid bolt I can be same as antiskid bolt II, and the structure of mounting hole I can be same as mounting hole II, enabling foe comfort to install. Meanwhile, the antiskid bolt I can interchange with antiskid bolt II, wherein the internal supports are vertically and horizontally interlaced with each other, or vertically interlaced with each other, or disposed along the diagonals of the plane of the floor body and interlaced with each other, as shown in FIG.14.

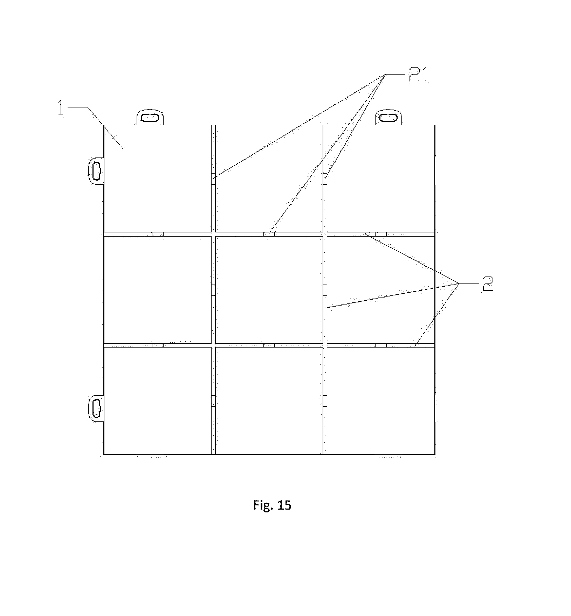

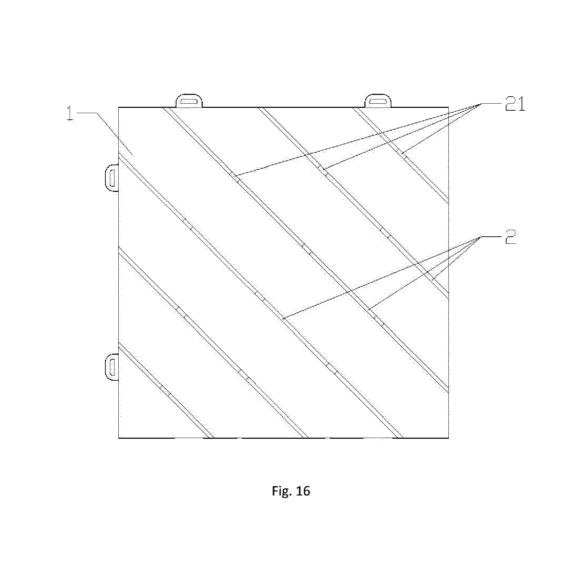

In addition, the rhones can be merely disposed, as shown in FIG.1, in horizontal or vertical direction, or interlaced with each other as shown in FIG.15, or disposed obliquely as shown in FIG.16. the quantity of the connection can depend on the length and strength requirements

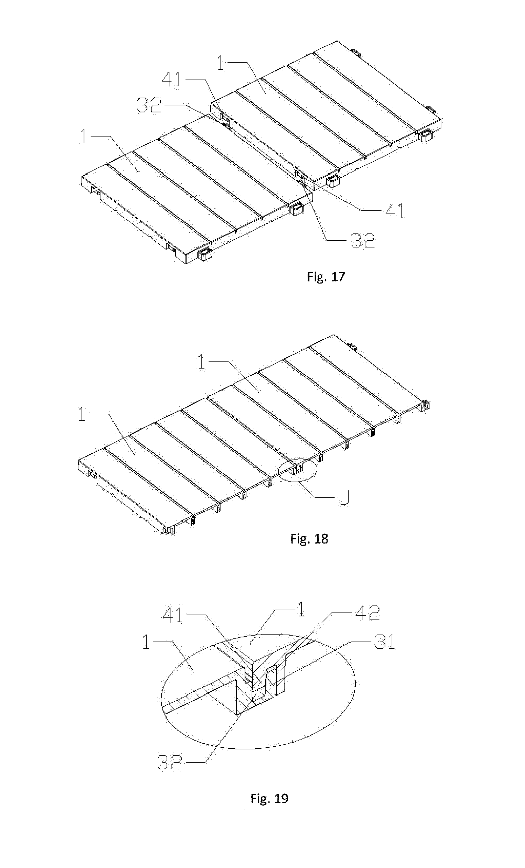

For the connection configuration between the two raised floor, as shown in fig. 17 and 18, when being bonded and installed, the toward groove portion and flat convex portion of which are tightly bonded with each other, which enabling for convenient and reliable installation.

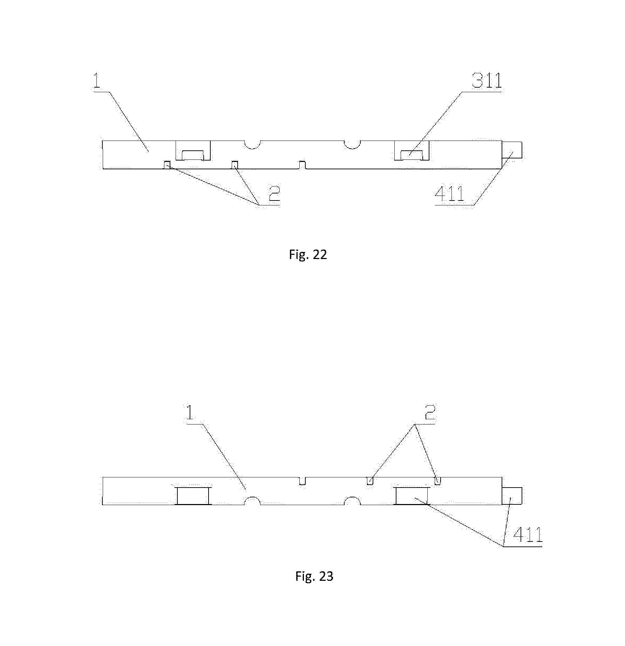

As shown in FIG.22 and 23, a second embodiment of the invention is illustrated therein, which includes a floor body 1, a reinforcing part being disposed at the bottom of the floor body includes a first reinforcing band 111 and a second reinforcing band 112 disposed at the bottom of the floor body and interlaced with each other. A drainage is disposed on the floor body. wherein the drainage includes a rhone 2 disposed on the upper surface of the floor body and drainage hloes 211 passing through the floor body downwards and being disposed within the floor body.

The floor body includes n×n unit panels 101, perfectly 2×2 unit panels in the embodiment, wherein the rhones are parallelly disposed on the unit panel therebetween, the rhones in the orthogonal direction of adjacent 2 units panels are perpendicular therebetween, the first reinforcing band and the second reinforcing band are disposed within the area formed by projecting 2 rhones on the lower surface of floor body, on basis of which the reinforcing part further includes a third reinforcing band 113 disposed on the bottom surface of the floor body and connected the first reinforcing band and the second reinforcing band, wherein the third reinforcing band is perpendicular to the area formed by projecting 2 rhones on the lower surface of floor body,

Furthermore, a connection for connecting with other floor bodies is disposed in the floor body, the connection includes clipping grooves 411 disposed at the opposite sides of the floor body and clipping bulges 311 disposed at the other opposite sides of the floor body, wherein the clipping bulge clips and matches with the clipping groove, which enabling for facilitating installation, wherein drainage holes 412 are disposed within the clipping groove, perfectly at the bottom of the clipping grooves.

In the embodiment, the first reinforcing band and the second reinforcing band are perpendicular therebetween.

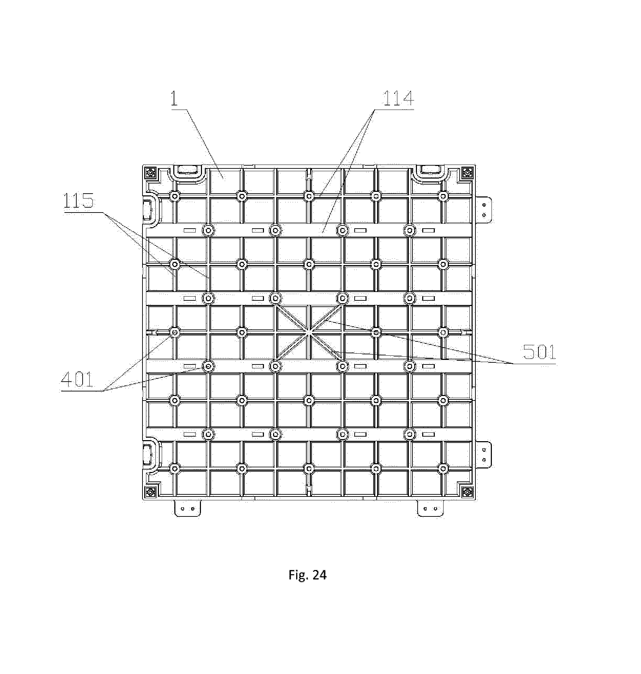

As illustrated by reference to FIG.24, a third embodiment of the raised floor of the invention including a floor body 1 at which frontside horizontally disposed a plurality of rhones and reinforcing bands disposed at the backside of the floor body, the reinforcing part includes a plurality of horizontal reinforcing bands 114 disposed horizontally and a plurality of vertical reinforcing bands 115 vertically, wherein in the embodiment a supporting tube 401 for supporting the floor body as well as effectively protecting the connection spot from stress concentration thereon is disposed at the connection spot of the horizontal reinforcing band and vertical reinforcing band, the level of lower surface of the supporting tube is lower than the horizontal and vertical bands. The width of horizontal reinforcing band corresponding to the rhone is larger than each sites on other position.

Furthermore, the reinforcing band further includes at least one oblique reinforcing band 501 which connects the adjacent 2 obliquely corresponding connection spots therebetween, wherein the oblique reinforcing band is perfectly disposed in centre of the backside of the floor body.

In the embodiment, FIG.24 illustrates a simplified structure therefrom, wherein 4 oblique reinforcing bands are only disposed at the backside of the floor body, which further combine with 3 horizontal reinforcing bands and 3 vertical reinforcing bands to form a " 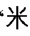 " shaped reinforcing band structure. Furthermore, oblique reinforcing bands definitely may be disposed between all the connection parts of the horizontal reinforcing bands and vertical reinforcing bands obliquely opposite sited therebetween, or be disposed as a "X" cross shape structure between the adjacent 2 horizontal reinforcing bands or vertical reinforcing bands, enabling for further reinforcing the strength of the floor body. To rotate the embodiment of the invention in 90 degree can be equivalent to disposing vertical rhones within the raised floor.

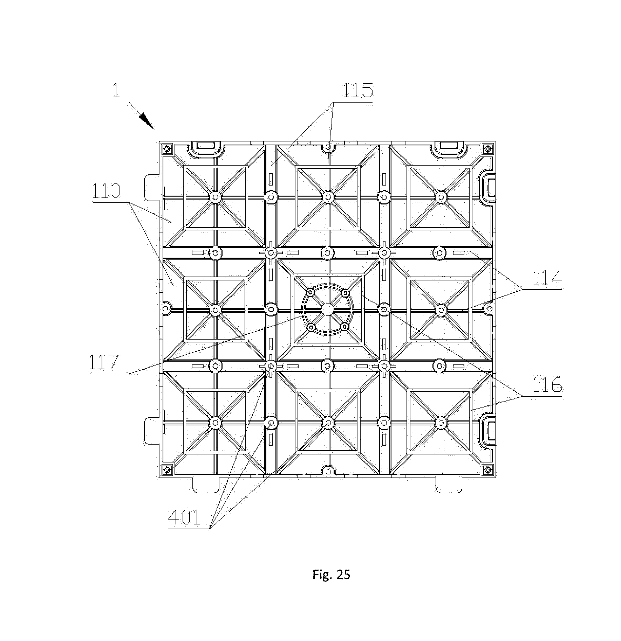

As illustrated by reference to FIG.25, a fourth embodiment of the raised floor of the invention including a floor body 1 at which frontside horizontally and vertically disposed a plurality of rhones and reinforcing bands disposed at the backside of the floor body, wherein the floor body being divided by said rhones into N×M pieces 110 connected therebetween, in the embodiment, the reinforcing band includes a plurality of horizontal reinforcing bands 114 disposed horizontally and a plurality of vertical reinforcing bands 115 vertically, and closing reinforcing rings 116 disposed at the backside of the floor body, further including a supporting tube 401 disposed at the connection spot of the horizontal reinforcing band and vertical reinforcing band, the level of lower surface of the supporting ring is lower than the horizontal and vertical bands, and the closing reinforcing band, the width of horizontal reinforcing band corresponding to the horizontal rhone is larger than each sites on other position, the width of horizontal reinforcing band corresponding to the vertical rhone from the vertical reinforcing band is larger than each sites on other position. The closing reinforcing ring shapes as rectangle in parallel to the edge of the floor body as well as other symmetrical shape such as annular, hexagon and so on.

Furthermore, the reinforcing band further includes a plurality of oblique reinforcing bands which connect the adjacent 2 oblique corresponding connection spots therebetween, circular reinforcing rings 117 are disposed in centre of the backside of the floor body, in the embodiment, the circular reinforcing rings are disposed within the closing reinforcing ring.

In the embodiment, the oblique reinforcing bands are disposed obliquely in angle 45 degree since the floor body is a quadrate structure, meanwhile, the oblique reinforcing bands can be combined as a "X" cross shape structure between the adjacent 2 horizontal reinforcing bands or vertical reinforcing bands, enabling foe reinforcing the strength of the floor body.

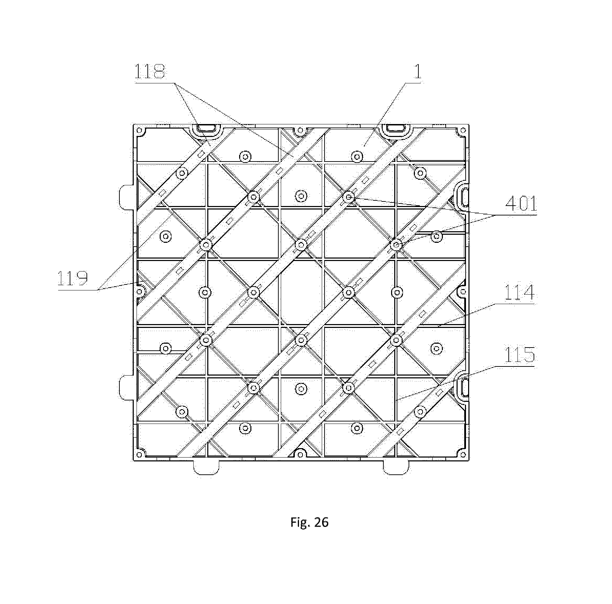

As shown in FIG.26, a fifth embodiment of a raised floor in the invention including a floor body at which frontside obliquely disposed a plurality of rhones and reinforcing bands disposed at the backside of the floor body, which being characterized in that the reinforcing band including a first oblique reinforcing band in parallel to the rhone and a second reinforcing band perpendicular thereto, wherein a supporting tube for supporting the floor body as well as effectively protecting the connection spot from stress concentration thereon being disposed at the connection spot of the first and second reinforcing bands.

In addition, the reinforcing bands further include at least one horizontal reinforcing band 114 and at least one vertical reinforcing band 115 as well, meanwhile, a supporting tube is disposed at the part between the reinforcing bands at the backside of the floor body.

As illustrated in mentioned embodiments above, determining the quantity of the horizontal and vertical reinforcing bands depends on actual reinforcement requirement. Meanwhile, disposing the supporting tube at the part between the reinforcing bands at the backside of the floor body depends on actual reinforcement requirement.

The mould of the raised floor utilizing the manufacturing process in the invention is objective to the raised floor mentioned above, the raised floor is directly injected and moulded within the mould, which enables for simplifying the operation and procedure.

## Claims

1. A manufacturing process for raised floor, comprising the steps that
(1) refining and granulating a WPC material
(a) breaking and grinding wasted wood or fiber material into fine powder with fineness in 60-80 mesh, then naturally drying it for subsequent use;
(b) blending the fine powder in weight 34%-54%, active calcium carbonate in weight 2% - 4% , WPC processing agent in weight 4% - 6% into PP resin or PE or PET plastic raw material in weight 35% - 55% to form a WPC material in high blending speed, wherein blending temperature ranges from 100 to 120°C, blending time depending on the dry degree of the fine powder or fiber powder ranges from 15 to 20 min when the moisture is lower than 1%, and from 20 to 30 min when the moisture is more than 1%, time of utes, and rotating speed ranges from 100 to 430 RPM;
(c) cooling down the WPC material after high-speed blending to 40°C, wherein the cooling time ranges from 10 to 20 min, rotating speed ranges from 70 to 100 RPM;
(d) putting the cooled and blended WPC material into an extrusion machine to extrude a WPC splat in length-to-diameter ratio 36:40 and rotating speed 500 RPM and cutting the WPC splat, and then storing the splats into a storage silo to naturally cool down for subsequent use;
(2) manufacturing a raised floor
(a) transporting the WPC splats from the storage silo into a baking cylinder to prebake and dry in ,temperature 80±5°C and 2±0.5 hours;
(b)transporting the WPC splats from the cylinder into a plastic injection machine which clamping force is not less than 200 tons, wherein the plastic injection machine is disposed a high wear-resisting B type screw, and the highest temperature of stove is 190±10°C, and the temperature of its nozzle is 170±10°C;
(c) extruding the WPC splats from the plastic injection molding machine into a raised floor mould cavity by pressure 125 kgFcm²-135 KGF/cm² with an injection molding cycle 40 seconds, wherein the pressure holding cycle is 15±5 seconds, cooling time is 12 - 20 seconds, and then forming and ejecting the WPC splats, wherein further includes the step that controlling the temperature of the raised floor mould within 80±10°C by a temperature controller.

2. A manufacturing process for raised floor according to claim 1, wherein the fiber material is made of straw and bran shell; the WPC processing agent composes of SBS ethylene copolymer in weight 1.5-2.5% and maleic anhydride grafted polyproylene MAH-G-PP in weight 2.5%-3.5%.

3. A manufacturing process for raised floor according to claim 1, wherein the process of refining and granulating the WPC material further includes the step that add iron series pigments in weight 0.5%-1.3%, antioxidant in weight 0.4%, stabilizer in weight 0.3%, germicide in weight 0.3%, plastic agent toughening reagent in weight 0.2% and lubricant in weight 0.3%-0.7%; wherein the iron series pigment may be blended in accordance with color requirement of customers, commonly using carbon black SJR-30, oxidation iron oxide red 130 A, ferric oxide yellow N0313; the antioxidants can adopt 1010, the stabilizer can adopt UV-531, the antibacterial agent may adopt WPC-guard, the plastic toughening agents can adopt EPDM, and the lubricant can adopt No.58 paraffin wax.

4. A raised floor utilizing the manufacturing process according to claim 1, including a floor body (1), which being **characterized in that** further including supports extended downward from the bottom side of the floor body, a drainage disposed on the floor body for ruling water out the raised floor, a connecting part disposed at each side part of the floor body for interacting with other raised floor, and antiskid portions disposed at each support for enhancing the friction coefficient of the raised floor..

5. A raised floor according to claim 4, wherein the drainage includes a rhone (2) passing through the floor body and being disposed in the floor body, wherein a tiebar connecting the opposite side of the rhone is disposed in the rhone, the tiebar is horizontally disposed in the rhone.

6. A raised floor according to claim 5, wherein the opposite sides of the rhone incline towards the rhone, allowing for the rhone shaped as an obtrapezium.

7. A raised floor according to claim 5, wherein parts of the opposite sides of rhone between an upper aperture of the rhone and the postion disposed the tiebar incline towards the rhone, and between the position disposed the tiebar and an lower aperture of the rhone incline backwards the rhone, allowing for the rhone shaped as a sandglass.

8. A raised floor according to claim 4, wherein the connecting part includes connections I (3) disposed between a side portion I (11) and a side portion II (12) and connections II (4) disposed between a side portion III (13) opposite to the side portion I and a side portion IV (14) opposite to the side portion II, the quantity of the connections II equals to the connections I. The connections II of a raised floor match and embed into the connections I of another raised floor between two floors..

9. A raised floor according to claim 4, wherein a caulking groove (32) matches with the connection II, 2 flat convex portions (31) are disposed on each side, the distance between the outside of the flat convex portion and the outside of the caulking groove is no less than 1.8mem, the length of the caulking groove is no less than 5mm, and the width of the caulking groove is no less than 3mm, the connection II includes a downward convex portion (41) protruding downward into the side part III and side part IV disposed therebetween and a toward groove portion (42) protruding toward into the side part III and side part IV disposed therebetween, wherein the downward convex portion matches with the caulking groove, and the toward groove portion matches with the flat convex portion.

10. A raised floor according to claim 4, wherein the support includes external supports (5) disposed at the 4 broadsides of the bottom of the floor body and connected with each other and internal supports (6) disposed at the bottom of the floor body and interlaced with each other. The antiskid portion includes an antiskid bolt I (51) disposed on the external support and an antiskid bolt II disposed on the internal support, a mounting hole I (52) for accommodating the antiskid bolt I is disposed at the bottom of a connecting part of 2 external supports, a mounting hole II (62) for accommodating the antiskid bolt II is disposed at the bottom of an interlacing part of 2 internal supports.

11. A raised floor including a floor body (1), which is **characterized in that** a reinforcing part being disposed at the bottom of the floor body..

12. A raised floor according to claim 11, wherein the reinforcing part includes a first reinforcing band (111) and a second reinforcing band (112) disposed at the bottom of the floor body and interlaced with each other.

13. A raised floor according to claim 11, wherein a drainage is disposed on the floor body.

14. A raised floor according to claim 13, wherein the drainage includes a rhone (2) disposed on the upper surface of the floor body and drainage hloes (211) passing through the floor body downwards and being disposed within the floor body.

15. A raised floor according to any one of claim 12 and 13, wherein the floor body includes n×n unit panels (101), wherein the rhone is parallelly disposed on the unit panel, the rhones in the orthogonal direction of adjacent 2 units panel are perpendicular to each other, the first reinforcing band and the second reinforcing band are disposed within the area formed by projecting 2 rhones on the lower surface of floor body.

16. A raised floor according to claim 12, wherein the reinforcing part further includes a third reinforcing band (113) disposed on the bottom surface of the floor body and connected the first reinforcing band and the second reinforcing band, enabling for further reinforcing the raised floor.

17. A raised floor according to claim 16, wherein the first reinforcing band and the second reinforcing band are perpendicular therebetween, enabling for facilitating processing and molding.

18. A raised floor according to any one of claim 11 and 13, wherein a connection for connecting with other floor bodies is disposed in the floor body.

19. A raised floor according to claim 18, wherein the connection includes clipping grooves (411) disposed at the opposite sides of the floor body and clipping bulges (311) disposed at the other opposite sides of the floor body, wherein the clipping bulge clips and matches with the clipping groove, which enabling for facilitating installation.

20. A raised floor according to claim 19, wherein drainage holes (412) are disposed within the clipping groove.

21. A raised floor including a floor body (1) at which frontside horizontally disposed a plurality of rhones and reinforcing bands disposed at the backside of the floor body, which is **characterized in that** includes a plurality of horizontal reinforcing bands (114) disposed horizontally and a plurality of vertical reinforcing bands (115) vertically, wherein a supporting tube (401) for supporting the floor body as well as effectively protecting the connection spot from stress concentration thereon is disposed at the connection spot of the horizontal reinforcing band and vertical reinforcing band,

22. A raised floor according to claim 21, wherein the level of lower surface of the supporting tube is lower than the horizontal and vertical bands. The supporting tube contacts with ground and further imposes the reinforcing bands to be divorced from the ground.

23. A raised floor according to claim 21, wherein the width of horizontal reinforcing band corresponding to the rhone is larger than each sites on other position, enabling for offsetting the force applying on the floor body caused by disposing the rhones with the reinforced horizontal reinforcing bands.

24. A raised floor according to claim 21, wherein the reinforcing band further includes at least one oblique reinforcing band (501) which connects the adjacent 2 obliquely corresponding connection spots therebetween.

25. A raised floor according to claim 24, wherein the oblique reinforcing band is disposed in centre of the backside of the floor body.

26. A raised floor including a floor body (1) at which frontside horizontally and vertically disposed a plurality of rhones and reinforcing bands disposed at the backside of the floor body, wherein the floor body being divided by said rhones into N×M pieces (110) connected therebetween, which being **characterized in that** the reinforcing band including a plurality of horizontal reinforcing bands disposed horizontally and a plurality of vertical reinforcing bands vertically, and closing reinforcing rings (116) disposed at the backside of the floor body, further including a supporting tube (401) disposed at the connection spot of the horizontal reinforcing band and vertical reinforcing band,

27. A raised floor according to claim 26, wherein the level of lower surface of the supporting ring is lower than the horizontal and vertical bands, and the closing reinforcing band.

28. A raised floor according to claim 26, wherein the width of horizontal reinforcing band corresponding to the horizontal rhone is larger than each sites on other position, the width of horizontal reinforcing band corresponding to the vertical rhone from the vertical reinforcing band is larger than each sites on other position.

29. A raised floor according to claim 26, wherein the closing reinforcing ring shapes as rectangle in parallel to the edge of the floor body.

30. A raised floor according to claim 26, wherein the reinforcing band further includes a plurality of oblique reinforcing bands which connect the adjacent 2 oblique corresponding connection spots therebetween.

31. A raised floor according to claim 4, wherein circular reinforcing rings (117) are disposed in centre of the backside of the floor body.

32. A raised floor according to claim 4, wherein the circular reinforcing rings are disposed within the closing reinforcing ring.

33. A raised floor including a floor body (1) at which frontside obliquely disposed a plurality of rhones and reinforcing bands disposed at the backside of the floor body, which is **characterized in that** the reinforcing band including a first oblique reinforcing band (118) in parallel to the rhone and a second reinforcing band (119) perpendicular thereto, wherein a supporting tube (401) for supporting the floor body as well as effectively protecting the connection spot from stress concentration thereon being disposed at the connection spot of the first and second reinforcing bands.

34. A raised floor according to claim 33, wherein the level of lower surface of the supporting ring is lower than the first and second band.

35. A raised floor according to any one of claim 33 and 34, wherein the width of first oblique reinforcing band corresponding to the rhone is larger than each sites on other position.

36. A raised floor according to claim 33, wherein the reinforcing band further includes at least one horizontal reinforcing band.

37. A raised floor according to claim 33 or 36, wherein the reinforcing band further includes at least one vertical reinforcing band.

38. A raised floor according to claim 33, wherein a supporting tube is disposed at the part disposed reinforcing bands.
